# EUROPÄISCHE PATENTSCHRIFT

(11) **EP 0 825 009 B1**
(45) Veröffentlichungstag und Bekanntmachung des Hinweises auf die Patenterteilung: **19.09.2001**
(21) Anmeldenummer: 97810546.8
(22) Anmeldetag: 31.07.1997
(51) Int. Cl.: B29C 45/44

(54) **Spritzgiesswerkzeug zur Herstellung von Drehverschlüssen**
Injection mould for producing screw closures
Moule d'injection pour fabriquer des fermetures à vis

(30) Priorität: 21.08.1996 CH 205296
(43) Veröffentlichungstag der Anmeldung: 25.02.1998
(73) Patentinhaber: SCHÖTTLI AG, 8253 Diessenhofen (CH)
(72) Erfinder: Winiger, Paul, 8253 Diessenhofen (CH); Christinger, Adrian, 8253 Diessenhofen (CH)
(74) Vertreter: Gachnang, Hans Rudolf

(56) Entgegenhaltungen:
- EP-A- 0 421 136
- DE-A- 3 439 212
- FR-A- 889 742
- US-A- 3 774 874
- US-A- 4 412 806
- US-A- 5 281 385
- US-A- 5 387 389
- US-A- 5 470 221
- PATENT ABSTRACTS OF JAPAN vol. 10, no. 77 (M-464), 26.März 1986 & JP 60 220722 A (TOYODA GOSEI KK), 5.November 1985,
- PATENT ABSTRACTS OF JAPAN vol. 13, no. 565 (M-907), 14.Dezember 1989 & JP 01 235615 A (JAPAN CROWN CORK CO LTD), 20.September 1989,

## Beschreibung

Gegenstand der Erfindung ist ein Spritzgiesswerkzeug zur Herstellung von Drehverschlüssen gemäss Oberbegriff des Patentanspruches 1.

Drehverschlüsse, auch Schraubverschlüsse genannt, werden zum Verschliessen von Gebinden, insbesondere von Flaschen eingesetzt und sind im Spritzgiessverfahren aus Kunststoff hergestellt. Um eine missbräuchliche Öffnung sichtbar zu machen, wird am unteren Rand des Mantels des Drehverschlusses ein sog. Sicherheitsband ausgebildet, das durch aufbrechbare Verbindungen, z.B. Filmverbindungen oder feine Stege, mit dem Mantel verbunden ist.

Aus dem Stand der Technik (DE-A1 34 39 212) ist ein Spritzgiesswerkzeug bekannt, dessen seitliche Formteile spannzangenartig ausgebildet und bei geschlossener Form mittels eines Zentrierringes zusammenhaltbar sind. Das spannzangenartige Werkzeug ist aus einer Mehrzahl von durch Trennschnitte aus dem zylindermantelförmigen Werkzeug erzeugten Lappen aufgebaut. Die sich bei geschlossener Form kontaktierenden einander gegenüberliegenden Seitenflanken der Lappen sind sehr schwierig und aufwendig herzustellen, da die Bearbeitung in entspanntem, d.h. nach aussen gespreiztem Zustand zu erfolgen hat und bei geschlossener Form die Flächen absolut exakt aufeinander liegen müssen, um die Trennstellen möglichst unsichtbar zu gestalten. Nebst der aufwendigen Herstellung hat die bekannte Form den Nachteil, dass bei einem Crash, z.B. wenn ein erkalteter Spritzling (Drehverschluss) nicht vollständig aus dem Werkzeug entfernt wird und die Werkzeuge für das Spritzen des nächsten Spritzlings zusammenfahren, einzelne Lappen durch die hohen auf diese wirkenden axialen Kräfte gestaucht werden können. Bereits eine sehr geringe Stauchung bewirkt aber, dass die zuvor exakt bearbeiteten, sich gegenüber liegenden Kontaktflächen verschoben oder verdreht werden. Eine Reparatur eines einzelnen Lappens ist fast ausgeschlossen, und folglich sind die Kosten für den Ersatz des gesamten Werkzeuges sehr hoch. Zudem muss stets, auch wenn nur ein einzelner Lappen beschädigt ist, die gesamte Spannzange ausgewechselt werden.

Aus dem Deutschen Gebrauchsmuster G 89 11 864 ist weiter ein Druckgussform-Zusatzteil bekannt. Dieses umfasst eine vierteilige Form, die aus identischen Segmenten zusammengesetzt ist. Die Segmente sind als zweiarmige Hebel ausgebildet, welche je um eine Schwenkachse schwenkbar gelagert sind. Als Schwenkachse dient ein umlaufender Wulst auf einem Steuerstift. Mit einer relativ zum Steuerstift verschiebbaren, die Segmente aussen umfassenden Steuerhülse können letztere um den Steuerwulst aus einer Offenstellung in die Geschlossenstellung verschwenkt werden. In der Geschlossenstellung bilden die vier Segmente einen Teil der Aussenform für den Spritzling. In der Offenstellung kann der Spritzling aus der Form entnommen werden. Die vier Segmente sind einzig auf dem umlaufenden Steuerwulst gelagert. Eine präzise verlaufende Schwenkbewegung ist durch eine solche Lagerung nicht sichergestellt und zudem muss der Steuerwulst, um den sich die Segmente bewegen, sämtliche axial wirkenden hohen Druckkräfte aufnehmen, die beim Spritzen im Werkzeug auftreten.

Aufgabe der vorliegenden Erfindung ist die Schaffung eines aus Segmenten aufgebauten Spritzgiesswerkzeuges, das kostengünstig herstellbar ist und die Herstellung hochpräziser Teile erlaubt.

Gelöst wird diese Aufgabe durch die Merkmale des Patentanspruches 1.

Die einzelnen Segmente können, da sie nicht miteinander verbunden sind, ausserordentlich präzise hergestellt werden und bilden, wenn sie zusammengeführt werden, eine im wesentlichen spaltfreie Aussenform. Die Abstützung sowohl in radialer als auch in axialer Richtung erfolgt durch geschliffene Flächen an den Segmenten und an den Segmentaufnahmebereichen der Form. Die Segmente sind, da sie alle identisch ausgebildet sind, austauschbar, und es muss bei einer Beschädigung eines oder mehrerer der Segmente jeweils nur das beschädigte gegen ein neues ausgetauscht werden. Es ist auch möglich, einzelne Segmente durch solche mit anderer Oberflächen-Ausgestaltung (Form, Beschriftung etc.) auszutauschen. Damit ist die Stillstandszeit sehr kurz. Es sind auch wegen den präzisen Auflage- und Befestigungsflächen keine Justierarbeiten beim ersten Zusammenbau und nach dem Ersatz nötig. Die Stützschulter an den Segmenten, die sich im Bereich des zu bildenden Formnestes befindet, ermöglicht es, axiale Kräfte während des Spritzens spielfrei aufzunehmen. Dadurch wird die Gefahr einer Beschädigung durch zwischen die beiden Formhälften gelangende Kunststoffteile und dgl. auf ein Minimum vermindert.

Mit der Spreizhülse können nicht nur die Segmente in exakt vorgegebener Weise um den notwendigen Betrag gespreizt werden, um Hinterschnitte freizulegen, sondern es besteht auch die Möglichkeit, mit der Spreizhülse den Drehverschluss vom Innenwerkzeug abzuschieben und so dessen Ausstoss sicherzustellen.

Anhand eines illustrierten Ausführungsbeispieles wird die Erfindung näher erläutert. Es zeigen:
- Figur 1: eine perspektivische Darstellung eines Drehverschlusses,
- Figur 2: einen Querschnitt durch ein Spritzgiesswerkzeug, linke Schnitthälfte geschlossen; rechte Schnitthälfte geöffnet,
- Figur 3: einen Querschnitt durch das Werkzeug im Bereich des Oberteils der Segmente.

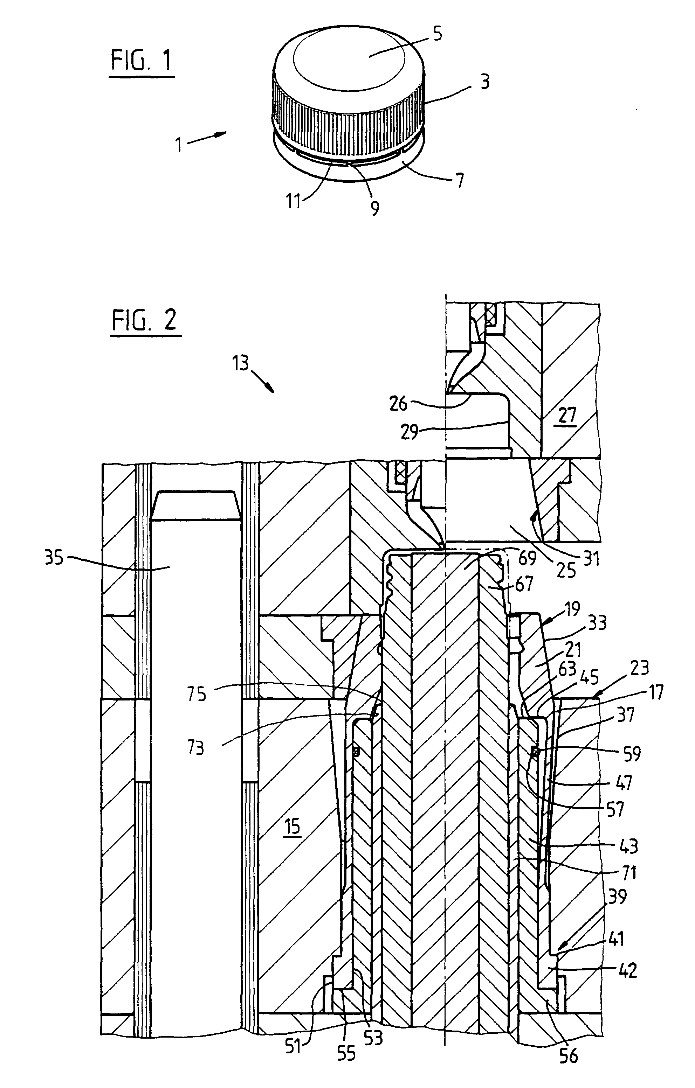

Der in Figur 1 dargestellte Drehverschluss 1 umfasst einen Mantel 3 mit einem Boden 5 und ein Sicherheits- oder Garantieband 7, das durch feine, fadenförmige Stege oder einen dünnen Film 9 mit der Unterkante 11 des Mantels 3 verbunden ist. Auf der Innenfläche des Mantels 3 ist ein Gewinde ausgebildet, das aus einem oder mehreren Gewindegängen besteht. Am Sicherheitsband 7 sind üblicherweise nach innen gerichtete Nocken ausgebildet, die den am Flaschenhals ausgebildeten Wulst untergreifen.

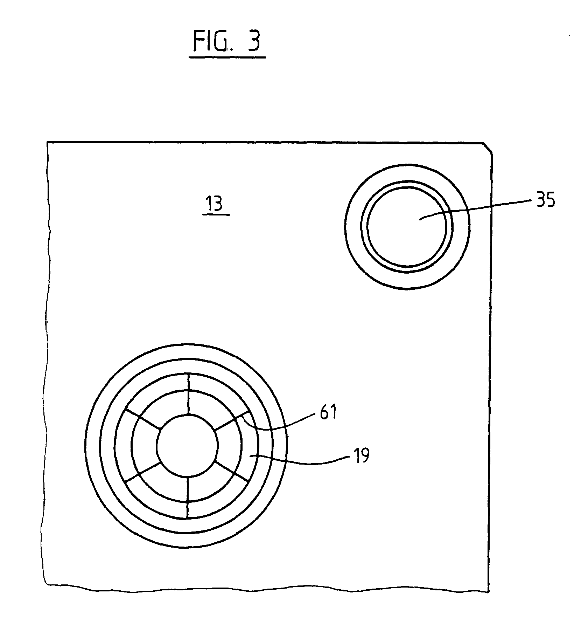

Die Herstellung des Drehverschlusses 1 kann in vorteilhafter Weise in einem Spritzgiesswerkzeug 13 erfolgen, das im folgenden anhand der Figuren 2 und 3 näher erläutert wird.

In der unteren Hälfte 15 des nur teilweise dargestellten Werkzeuges 13 sind in einer ersten Ausnehmung 17 beispielsweise sechs Segmente 19 eingesetzt, deren Oberteil 21 die Aussenkontur des unteren Abschnittes des Mantels 3 und des Sicherheitsbandes 7 des zu spritzenden Drehverschlusses 1 bilden. Die Oberteile 21 überragen die Trennebene 23 der unteren Werkzeughälfte 15 und greifen bei geschlossenem Werkzeug 13 in eine zweite Ausnehmung 25 in dessen oberer Werkzeughälfte 27 ein. Der Grund 26 der Ausnehmung 25 bildet den Boden 5 bzw. die Stirnfläche des Drehverschlusses 1 und die Seitenwand 29 den oberen Abschnitt des Mantels 3. Im Anschluss an den die Seitenwand 29 bildenden Teil schliesst ein kegelstumpfförmiger Abschnitt 31 an, dessen Konizität derjenigen der Aussenfläche 33 der zusammengefügten Segmente 19 entspricht. Die beiden Werkzeughälften 15 und 27 sind durch Führungsmittel 35 bekannter Bauart miteinander verbunden.

Die erste Ausnehmung 17 in der unteren Werkzeughälfte 15 ist in ihrem oberen Bereich 37 konisch und im unteren stufenförmig zylindrisch ausgebildet. Der stufenförmige Bereich 39 ist dazu bestimmt, einen umlaufenden Rand 41 an einem Einspannsockel 42 an den Segmenten 19 und einen flanschförmigen Abschluss 56 an einer Stützhülse 43 aufzunehmen und axial spielfrei zu halten. Die Stützhülse 43 erstreckt sich im Innern der Segmente 19 konzentrisch bis zu einer stufenförmigen unteren Auflagefläche 45 der Oberteile 21 der Segmente 19. An diese Auflagefläche 45 schliesst sich ein federelastischer Mittelteil 47 an, der sich bis an den Einspannsockel 42 erstreckt, an dem der umlaufende Rand 41 ausgebildet ist. Der Einspannsockel 42 weist eine bearbeitete Aussen- 51 und/oder Innenfläche 53 sowie eine in engen Toleranzen bearbeitete Stirnfläche 55 auf. Die Stirnfläche 55 liegt auf einem flanschförmigen Abschluss 56 an der Stützhülse 43 auf, deren Oberfläche ebenfalls bearbeitet ist. In der äusseren Mantelfläche der Stützhülse 43 kann peripher eine umlaufende Nut 57 eingelassen sein, welche einen O-Ring 59 aufnimmt. Der O-Ring 59 überragt die Mantelfläche der Stützhülse 43 in spannungsfreiem Zustand, wenn die Segmente 19 gespreizt sind (rechte Hälfte in Figur 2).

Bei geschlossenem Werkzeug 13 während des Spritzens (linke Hälfte in Figur 2) liegen die Seitenflächen 61 der Segmente 19, deren Oberflächen sehr präzise in engen Toleranzen bearbeitet sind, satt aneinander (Fig. 3). Die dazu notwendige Spannkraft wird durch die Wand der konisch ausgebildeten zweiten Ausnehmung 25 nach dem Schliessen des Werkzeuges 13 aufgebracht. Beim Schliessen der in ungespannter Ausgangslage radial nach aussen geschwenkten Oberteile 21 der Segmente 19 gelangt deren untere stufenförmige Auflagefläche 45 in spielfreie Anlage mit der oberen Stirnfläche 63 an der Stützhülse 43. Sämtliche axial von oben auf die Segmente 19 wirkenden Kräfte werden nun von den elastischen Abschnitten 47 der Segmente 19 ferngehalten und in die einteilige zylindermantelförmige Stützhülse 43 eingeleitet. Der O-Ring 59 wird bei geschlossenem Werkzeug 13 vollständig in die Nut 57 hineingepresst.

Nach Abschluss des Spritzvorganges werden die beiden Werkzeughälften 15 und 27 auseinandergefahren. Durch die Eigenspannung der Segmente 19 und die Spannkraft des zusammengepressten O-Ringes 59 spreizen die Segmente 19 leicht nach aussen. Mit einer zwischen der Stützhülse 43 und dem Innenwerkzeug 67 angeordneten Ausstosshülse 71, deren obere Stirnfläche einen konischen Abschnitt 73 aufweist, können die Segmente 19 weiter gespreizt und die hintergriffenen Bereiche zwischen den Stegen 9 am Drehverschluss 1 freigelegt werden. Die Ausstosshülse 71 wird zu diesem Zwecke axial nach oben geschoben. Durch eine weitere axiale Verschiebung der Ausstosshülse 71 und einen an deren Stirnfläche angebrachten abgeflachten Bereich 75 kann der Deckelverschluss 1 über das Innenwerkzeug 67 hinweg ausgestossen werden. Der Ausstoss des Drehverschlusses 1 vom Innenwerkzeug 67 kann auch durch einen axial verschiebbaren, zentral gelagerten Kern 69 erfolgen.

## Patentansprüche

1. Spritzgiesswerkzeug zur Herstellung von Drehverschlüssen mit einem Sicherheitsband, welches durch aufbrechbare Verbindungsstege oder einem Film mit dem Mantel des Drehverschlusses verbunden ist, mit einem spreizbare Segmente umfassenden Aussenform-Unterteil, einem Aussenform-Oberteil und einem Kern, welche zusammen ein Formnest bilden, **dadurch gekennzeichnet, dass** die Segmente (19) an ihren rückwärtigen, vom Formnest abgewandten Enden im Werkzeug-Unterteil (15) fest eingespannt sind.

2. Spritzgiesswerkzeug nach Anspruch 1, **dadurch gekennzeichnet, dass** die Segmente (19) einen Einspannsockel (42) aufweisen, dessen Stirnfläche (41), mindestens die äussere oder innere Mantelfläche sowie eine Schulterfläche in engen Toleranzen bearbeitet sind.

3. Spritzgiesswerkzeug nach einem der Ansprüche 1 oder 2, **dadurch gekennzeichnet, dass** zwischen dem Einspannsockel (42) und dem Oberteil (21) der Segmente (19) ein federelastischer Mittelteil (47) ausgebildet ist.

4. Spritzgiesswerkzeug nach Anspruch 3, **dadurch gekennzeichnet, dass** am Oberteil (21) ein umlaufender, absatzförmiger Abschluss (45) ausgebildet ist, der dazu dient, bei geschlossenem Werkzeug (13) auf der Stirnfläche (45) einer konzentrisch zu den Segmenten (19) im Werkzeug-Unterteil (15) eingesetzten Stützhülse (43) aufzuliegen.

5. Spritzgiesswerkzeug nach Anspruch 4, **dadurch gekennzeichnet, dass** an der Stützhülse (43) oben eine bearbeitete umlaufende Schulter (55) ausgebildet ist, auf der die unteren Auflageflächen (45) der Segmente (19) axial abgestützt sind.

6. Spritzgiesswerkzeug nach einem der Ansprüche 4 oder 5, **dadurch gekennzeichnet, dass** in der äusseren Mantelfläche der Stützhülse (43) eine umlaufende Nut (57) eingelassen ist, in welcher ein die Mantelfläche überragender flexibler O-Ring (59) eingelegt ist.

7. Spritzgiesswerkzeug nach einem der Ansprüche 4 bis 6, **dadurch gekennzeichnet, dass** zwischen dem Kern (69) und der Stützhülse (43) eine Ausstosshülse (71) axial verschiebbar gelagert ist.

8. Spritzgiesswerkzeug nach Anspruch 7, **dadurch gekennzeichnet, dass** die Ausstosshülse (71) oben einen konisch ausgebildeten Abschnitt (73) aufweist.

## Claims

1. Injection moulding tool for producing locking closures, having a safety strip which is connected to the casing of the locking closure by means of breakable connecting webs or a film, said tool having an externally shaped lower portion, which includes splayable segments, an externally shaped upper portion and a core, which component parts together form a mould cavity, **characterised in that** the segments (19) are firmly clamped in position in the lower tool portion (15) at their rear ends remote from the mould cavity.

2. Injection moulding tool according to claim 1, **characterised in that** the segments (19) have a clamping-in base (42), the end face (41) of which, at least the external or internal surface, as well as a shoulder face are processed within narrow tolerances.

3. Injection moulding tool according to one of claims 1 or 2, **characterised in that** a resilient central portion (47) is provided between the clamping-in base (42) and the upper portion (21) of the segments (19).

4. Injection moulding tool according to claim 3, **characterised in that** a circumferential, shoulder-like end (45) is provided on the upper portion (21) and, when the tool (13) is closed, it serves to lie on the end face (45) of a supporting sleeve (43), which is inserted in the lower tool portion (15) concentrically with the segments (19).

5. Injection moulding tool according to claim 4, **characterised in that** a treated circumferential shoulder (55) is provided at the top end of the supporting sleeve (43), the lower bearing surfaces (45) of the segments (19) being axially supported on said shoulder.

6. Injection moulding tool according to one of claims 4 or 5, **characterised in that** a circumferential groove (57) is provided in the external surface of the supporting sleeve (43), and a flexible O-ring (59), which protrudes beyond the surface, is inserted in said groove.

7. Injection moulding tool according to one of claims 4 to 6, **characterised in that** an ejector sleeve (71) is axially displaceably mounted between the core (69) and the supporting sleeve (43).

8. Injection moulding tool according to claim 7, **characterised in that** the ejector sleeve (71) has a conically configured portion (73) at its upper end.

## Revendications

1. Moule d'injection pour fabriquer des fermetures à vis ayant une bande de sécurité qui est reliée par des parties pleines de liaison pouvant être rompues ou par un film à la surface latérale de la fermeture à vis comprenant une partie inférieure de moule extérieur ayant des segments pouvant être écartés, une partie supérieure de moule extérieur et un noyau qui forment ensemble une empreinte de moule, **caractérisé en ce que** les segments (19) sont solidement encastrés à leur extrémité arrière et éloignés de l'empreinte du moule dans la partie (15) inférieure du moule.

2. Moule d'injection suivant la revendication 1, **caractérisé en ce que** les segments (19) comportent une embase (42) d'encastrement dont les surfaces (41) frontales au moins la surface latérale extérieure ou intérieure ainsi qu'une surface d'épaulement sont usinées à des tolérances étroites.

3. Moule d'injection suivant l'une des revendications 1 ou 2, **caractérisé en ce qu'**il est constitué entre l'embase (42) d'encastrement et la partie (21) supérieure des segments (19) une partie (47) intermédiaire ayant l'élasticité d'un ressort.

4. Moule d'injection suivant la revendication 3, **caractérisé en ce qu'**il est constitué sur la partie (21) supérieure un arrêt (45) en forme de talon faisant le tour qui est destiné à s'appliquer lorsque le moule (13) est fermé sur la surface (45) frontale d'une douille (43) d'appui insérée concentriquement aux segments (19) dans la partie inférieure du moule.

5. Moule d'injection suivant la revendication 4, **caractérisé en ce qu'**il est constitué sur la douille (43) d'appui en haut un épaulement (55) usiné et faisant le tour sur lequel les surfaces (45) inférieures d'appui des segments (19) s'appuient axialement.

6. Moule d'injection suivant l'une des revendications 4 ou 5, **caractérisé en ce qu'**il est ménagé dans la surface latérale extérieure de la douille (43) d'appui une rainure (57) faisant le tour et dans laquelle est introduit un joint (59) torique souple dépassant de la surface latérale.

7. Moule d'injection suivant l'une des revendications 4 à 6, **caractérisé en ce qu'**il est monté à coulissement axial une douille (71) d'expulsion entre le noyau (69) et la douille (43) d'appui.

8. Moule d'injection suivant la revendication 7, **caractérisé en ce que** la douille (71) d'expulsion comporte en haut une partie (73) conique.
